# EUROPEAN PATENT APPLICATION

(11) **EP 4 517 602 A1**
(43) Date of publication of application: **05.03.2025**
(21) Application number: 23306462.5
(22) Date of filing: 04.09.2023
(51) Int. Cl.: G06N 5/022, G06N 10/60, H04B 10/70

(54) **METHOD AND SYSTEM FOR PERFORMING SEMANTIC COMMUNICATION**

(71) Applicant: Commissariat à l'Energie Atomique et aux Energies Alternatives, 75015 Paris (FR); Université Technique de Dresde, 01069 Dresden (DE)
(72) Inventor: CALVANESE STRINATI, Emilio, 38054 GRENOBLE Cedex 09 (FR); BASSOLI, Riccardo, 01062 DRESDEN (DE); FITZEK, Franck, 01062 DRESDEN (DE)
(74) Representative: Atout PI Laplace

(57) **Abstract**

A method of transmitting semantic information, comprising the following steps carried out at a transmit station:
I. generating a knowledge graph;
II. generating a quantum representation of the knowledge graph comprising a plurality of entangled quantum subsystems; and
III. transmitting entanglement relationships of said quantum representation of the knowledge graph to a receive station through a quantum channel.

A method for receiving semantic information, comprising the following steps carried out at a receiving station:
i. receiving from a quantum channel a plurality of entanglement relationships between quantum subsystems of the receive station; and
ii. mapping said entanglement relationship into a knowledge graph.

Apparatuses for carrying out said methods

## Description

The invention relates to methods, apparatuses and a system for performing semantic communication between a transmit station and a receive station.

Semantic communication is a new paradigm for telecommunications which is expected to play an important role in future 6G networks. For a general introduction, see [Qin 2022]; for more details on the application of semantic communication to 6G networks see [Calvanese Strinati 2021].

In 1948 Shannon and Weaver [Shannon1948] categorized communication in three levels: (i) transmission of symbols (the technical problem); (ii) semantic exchange of transmitted symbols (the semantic problem); (iii) effect of semantic information exchange (the effectiveness problem). In the past 70 years, based on Shannon's and Weaver theory, communications primarily focused on how to accurately and effectively transmit symbols from the transmitter to the receiver. On the one hand, advances such as multiple-input multiple-output (MIMO) communications, new waveform design, mitigation of multiuser interference have improved the ability of transmitting information through a channel, approaching the theoretical capacity limit devised by Shannon; on the other hand, remarkable progress has been achieved in the network architecture, leading to network traffic engineering, network function virtualization (NFV), software defined networking (SDN), network slicing etc. However, the demand for wider and wider bandwidths to cope with the ever-increasing demand of higher data rates to accommodate for the incoming new services will likely bring to a bottleneck represented by the scarcity of resources, like spectrum and energy. This has brought a renewed interest to the semantic problem (level ii of Shannon's model).

Indeed, focusing on semantics and clearly identifying the goal of communication, allows distilling the data that are strictly relevant to conveying the information intended by the source or to fulfilling a predetermined goal, therefore significantly reducing the amount of data to be transmitted and recovered, thus allowing savings in bandwidth, delay and energy.

State-of-the-art approaches to semantic communications leverage on advances in the field of representation learning [Bengio 2013] and Transformer architectures0 with Attention mechanisms [Vaswani 2017]. End-to-end (E2E) neural architecture are devised to enable semantic transmission of Natural Language Processing (NLP) based sentences [Xie 2021], speech signals transmission, object recognitions (in images and videos). Transformers applicability is today understood to be effective mainly in such fields of applications. These "algorithmic" approaches are limited in flexibility: fixed number of semantic symbols is transmitted irrespective of the conveyed meaning in the transmitted sequence.

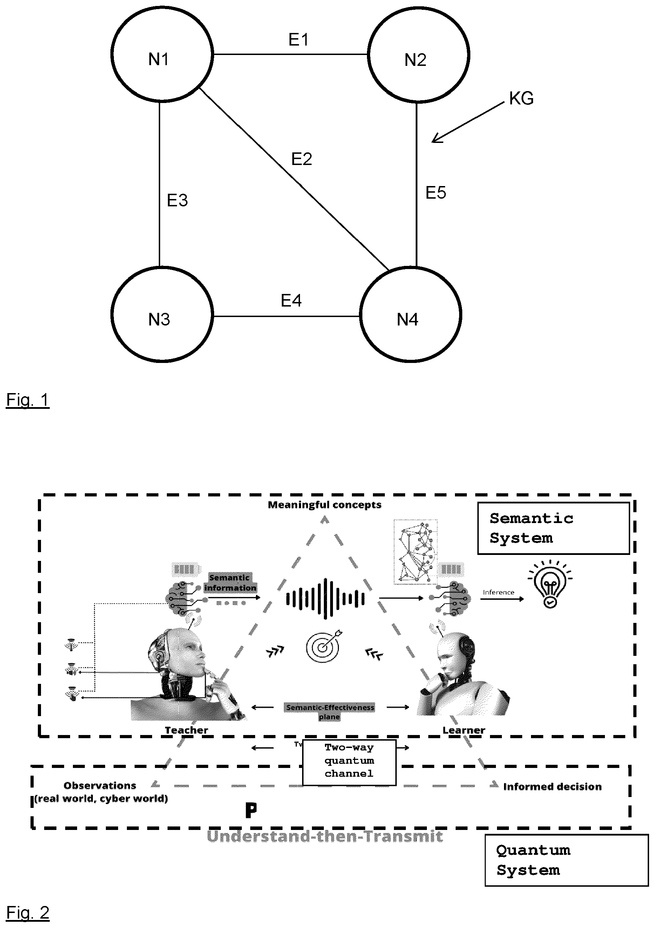

Knowledge graphs - also known as semantic network - are an advantageous way to encode and share semantic information. A knowledge graph uses a graph structure to represent a network of entities and illustrate the relationship between them. As illustrated on figure 1, a knowledge graph KG consists of nodes N1, N2, N3, N4 connected by edges E1, E2, E3, E4, E5. Each node represents a concept, and each edge represents a semantic relationship between the concepts represented by the nodes it connects. For instance, edge E1 represents a relationship between the concepts represented by nodes N1 and N2.

While knowledge graphs have been known for 50 years, only very recently some works started exploiting graph representation of knowledge to share and process semantic information for wireless semantic communications [Zhou 2022].. As today, such approaches are mainly limited to natural language processing applications, which have very loose constraints in terms of latency of communications and its required data rate

The invention aims at overcoming, in full or in part, the aforementioned drawbacks and limitations of semantic communication, in particular - but not only - for wireless applications. More particularly, the invention aims at permitting resource-efficient transmission of knowledge graphs between a transmit station and a receive station.

According to the invention, this aim is achieved by combining knowledge-graph based semantic communications with the emerging field of quantum communication. More precisely, it is achieved through the use of a quantum representation of a knowledge graph and its transmission through a quantum communication channel. Even more precisely, the quantum representation is based on a plurality of entangled quantum subsystems - e.g. qubits, qudits (generalizations of qubits, capable of taking more than two states) or continuous systems, physically implemented by e.g. electron spins, photon polarizations etc. Each quantum subsystem represents a node of the knowledge graph and each entanglement relationship represents an edge. This representation may for instance take the form of a quantum graph state, which is a highly-entangled many-qubit state (see [Hein 2004]).Alternative embodiments are possible, e.g. through a plurality of entangled pairs. The entanglement relationships of the quantum representation of a knowledge graph, generated at a transmit station, are then converted to "flying qubits" (or qudits) - typically photons - and transmitted either through an optical fiber or free-space propagation. At a receive station, the quantum entanglement relationship received through the quantum transmission channel are mapped back into a knowledge graph.

In addition to allowing a more efficient use of transmission resources, the use of quantum communications to transmit semantic graphs offers the advantage of intrinsic security against eavesdropping. This is a well-known property of quantum communication systems.

A first object of the present invention is then a method of transmitting semantic information, comprising the following steps carried out at a transmit station:
I. using a computer, generating a knowledge graph comprising nodes representing concepts and edges connecting nodes and representing semantic relationships between the corresponding nodes;
   characterized in that it further comprises:
   II. using a quantum processor, generating a quantum representation of the knowledge graph comprising a plurality of entangled quantum subsystems, wherein each quantum subsystem represents a node of the knowledge graph and an entanglement relationship between two said quantum subsystems represents an edge of the knowledge graph connecting the corresponding nodes; and
   III. using a quantum interface device, transmitting entanglement relationships of said quantum representation of the knowledge graph to a receive station through a quantum channel.

Another object of the invention is a method for receiving semantic information, characterized in that it comprises the following steps carried out at a receiving station:
i. using a quantum interface device, receiving from a quantum channel a plurality of entanglement relationships between quantum subsystems of the receive station; and
ii. using a quantum processor, mapping said entanglement relationship into a knowledge graph comprising nodes representing concepts and edges connecting nodes and representing semantic relationships between the corresponding nodes, wherein each node corresponds to a quantum subsystem and each entanglement relationship between two said quantum subsystems corresponds to an edge of the knowledge graph connecting the corresponding nodes.

Another object of the invention is a method of performing semantic communication between a transmit station and a receive station connected by a communication channel, characterized in that
- the communication channel comprises a quantum communication channel;
- the transmit station transmits semantic information over the quantum communication channel; and
- the receive station receives semantic information through the quantum communication channel.

Yet another object of the invention is an apparatus for transmitting semantic information according to the method comprising:
- a computer configured for generating a knowledge graph comprising nodes representing concepts and edges connecting nodes and representing semantic relationships between the corresponding nodes;
characterized in that it further comprises:
- a quantum processor, configured for generating a quantum representation of the knowledge graph comprising a plurality of entangles quantum subsystems, wherein each quantum subsystem represents a node of the knowledge graph and an entanglement relationship between two said quantum subsystems represents an edge of the knowledge graph connecting the corresponding nodes; and
- a quantum interface device, configured for transmitting entanglement relationships of said quantum representation of the knowledge graph to a receive station through a quantum channel.

Yet another object of the invention is an apparatus for receiving semantic information comprising:
- a quantum interface device, configured for receiving from a quantum channel a plurality of entanglement relationships between quantum subsystems of the receive station; and
- a quantum processor mapping said entanglement relationship into a knowledge graph comprising nodes representing concepts and edges connecting nodes and representing semantic relationships between the corresponding nodes, wherein each node corresponds to a quantum subsystem and each entanglement relationship between two said quantum subsystems corresponds to an edge of the knowledge graph connecting the corresponding nodes.

A further object of the invention is a semantic communication system comprising:
- such an apparatus for transmitting semantic information;
- such an apparatus (for receiving semantic information; and
- a quantum communication channel connecting the apparatus for transmitting semantic information and the apparatus for receiving semantic information.

Additional features and advantages of the present invention will become apparent from the subsequent description, taken in conjunction with the accompanying drawings, which show:
- figure 1, already described, an exemplary knowledge graph;
- figure 2, a general illustration of a quantum semantic communication system according to the invention;
- figure 3, a block diagram of a method of transmitting semantic information according to an embodiment of the invention;
- figure 4, a block diagram of an apparatus for transmitting semantic information (i.e. a transmit station) according to an embodiment of the invention;
- figure 5, a block diagram of a method of receiving semantic information according to an embodiment of the invention; and
- figure 6, a block diagram of an apparatus for transmitting semantic information (i.e. a transmit station) according to an embodiment of the invention.

As illustrated on figure 2, a quantum semantic communication system according to the invention comprises:
(1) One or more transmit units, also referred to as "senders", "source" or even "teachers" since they share processed version of observed data to assist the receiver ("learner") to operate an inference task or to extract selected information.
(2) Teachers have also a computer-implemented "intelligence unit" able to extract semantics, create/update ML (machine learning) /AI (artificial intelligence) models, operate ML/AI operations.
   According to the invention, teachers extract data/information to be shared with learner(s) in the form of (knowledge) graphs.
(3) Knowledge graphs can then be processed prior to communication (the transfer of data/information to the receiver), for instance being sparsified (reduction of edges and nodes according to specific criteria), divided in sub-graphs that can be
(4) One or more receive stations (mobile terminals, smart phones, mobile Edge hosts, etc.) or IoT (Internet of Things) devices. The receive station are also referred to as "learners" since they elaborate the received data to interpret either a semantic information and/or to operate an inference or to generate/update a neural network model. Such receivers have quantum systems (communication and computation unit) and a computer-implemented "intelligence unit" able to aggregate graphs (possibly previously divided in sub-graphs by the sender(s)), interpret semantics, create/update ML/AI models, operate ML/AI operations.
(5) A quantum system provides with the framework for transmitting and processing information using principles from quantum mechanics. Unlike classical communication systems, which rely on classical bits to represent and transmit information, quantum communication systems use quantum bits, or qubits, to encode and transmit quantum information.

We consider application scenarios where the sender share information to the receiver though a semantic communication chain. Thus, observed data available at the teacher(s) is semantically extracted (identifying the semantic concepts to be communicated), then mapped into semantic symbols, then structured in a (knowledge) graph..

Contrary to prior art semantic communication systems, such graphs are communicated via the quantum system, implementing a (optionally two-way) communication channel. Thus, such a system does not require to modulate symbols associated to the graph transmission via the classical wireless communication modules (modulator, encoder, waveform formation, etc.).

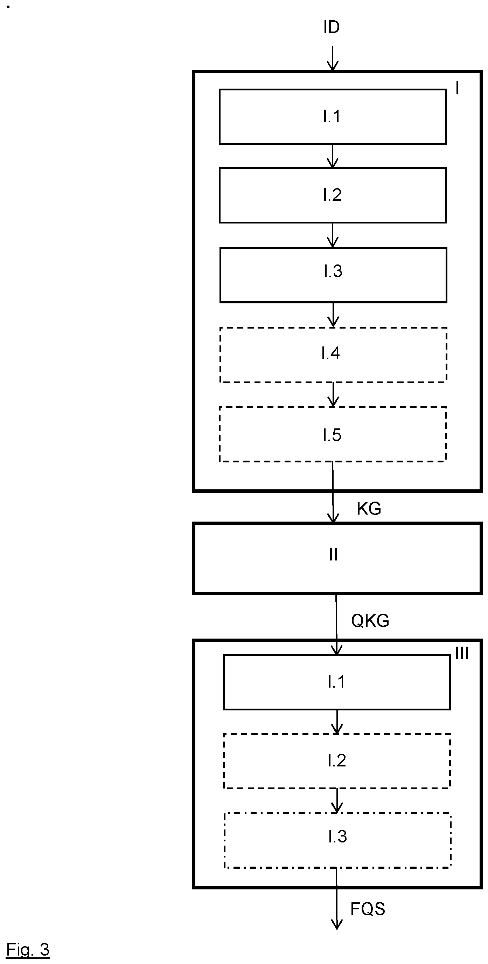

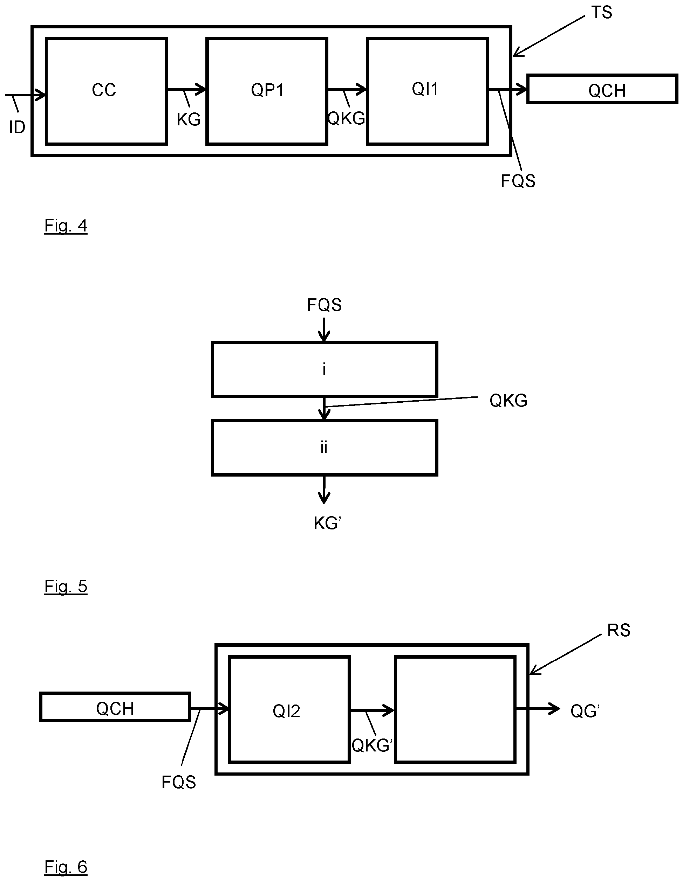

The operation and structure of a transmit station ("teacher") according to an embodiment of the invention will now be described with reference to figure 3 and figure 4, respectively.

The inventive method comprises a first computer-implemented step I of generating a knowledge graph comprising nodes representing concepts and edges connecting nodes and representing semantic relationships between the corresponding nodes. Said step comprises the following sub-steps, whose implementation is known in the art of semantic information processing:
1.1. Extracting semantic concepts and semantic relationships from input data ID. The data can result from new observations, new concepts being extracted from previously available data or new data (or a combination of them), new semantic extraction policies that generate new concepts, new concept to symbol mapping strategies (for instance a difference in the number of symbol per concept adopted). Semantic extraction can be done based on NN attention mechanism, although other approaches are also possible.
I.2 Mapping said semantic concepts into semantic symbols, and semantic relationships between semantic concepts into relationships between the corresponding semantic symbols. To this end, the teacher may chose a semantic communication compression versus ambiguity trade-off operation point, thus deciding the level of acceptable semantic ambiguity (many concepts represented with a set of symbols, in contrast with a one-to-one matching concept to symbol set where there is not ambiguity; as an example, week-end ambiguously maps into Friday night to Sunday night). This can be a NN function trained as for instance in [Sana 2022]. Also, the number of semantic symbols per concept representation varies depending on the complexity of the concept, the adopted language for representing the concepts which depends in principle on the quality of the semantic channel and the quality of the wireless channel. Again, this can be a NN function trained as for instance in [Sana 2022].
I.3 Extracting the knowledge graph KG from said semantic symbols and their relationships. This can be operated for instance with Graph Neural Networks and Graph Attention mechanisms.
   Step I of the inventive method may also comprise the following optional sub-steps aiming at simplifying the quantum encoding of the knowledge graph and/or its transmission through the quantum channel:
I.4 subdividing the knowledge graph into a plurality of sub-graphs;
I.5 simplifying the graph by comprising carrying out at least one operation between discretizing and thresholding semantic relationships between nodes of the knowledge graph before generating its quantum representation and/or replacing groups of K>2 nodes connected by K-1 equivalent edges with a single node.

The output of step I is therefore a - classical - knowledge graph KG, possibly decomposed into subgraphs.

The inventive method also comprises a second step II carried out by a quantum processor, consisting in generating a quantum representation QKG of the knowledge graph comprising a plurality of entangles quantum subsystems, wherein each quantum subsystem represents a node of the knowledge graph and an entanglement relationship between two said quantum subsystems represents an edge of the knowledge graph connecting the corresponding nodes. If optional step I.4 has been performed, this "quantum encoding" step is carried out over the different sub-graphs.

The quantum encoding of the knowledge graph can be based on qubits, i.e. two-state quantum subsystems. This is the most common approach in quantum information processing. However, alternative embodiments are possible. For instance the correlations among semantic concepts can be conveyed via the states of qudits. In particular, a stream of qudits (with length the number of edges of the semantic graph) is initialized and the various correlations are encoded by making more probable the measurement of some states. In order to do this, a quantum circuit with specific controlled quantum gates is used. Qudits are multilevel quantum systems that owns a larger state space for carrying information and for computations. Qudits can enhance algorithm efficiency, reduce the circuit complexity, and simplify the experiments. It has been shown that the correlations represented by semantic graphs can be encoded into qudits systems, see [Nikolaeva 2022] and [Whang 2023]. For the quantum encoding of graph correlations in qudits, it is possible to make use of Coupled Potential Wells generalised to d-quantum systems as explained in [Landau 2016]. If the transmission is considered to another network node, the conversion of these qudits into photonic quantum systems becomes necessary. The conversion between qudits to qubits and viceversa is possible via a proper design of the quantum circuit. For example, a conversion into qudits is described in [Nikolaeva 2022]. A d-qudit system (d>2) can be used for obtaining the same result as in the case of qubit-based computing. A circuit to transform the information coming from n-qubit system to m-qudit one can be designed, see again [Nikolaeva 2022]. On the other hand, [Whang 2023] has shown that it is possible to encode the necessary information of the semantic graphs directly into photonic qudits. The main advantage of using photonic quantum systems in computing and communication is that photons have long decoherence times compared to other quantum systems. The use of photons to carry qudits implies the encoding of semantic graphs' information into, for example, the orbital angular momentum, frequency-bin, and time-bin (see again [Whang 2023]).

Alternatively the correlations among semantic concepts can be encoded via the states of entangled quantum systems having continuously-varying complex amplitudes. The complex amplitudes of these entangled quantum systems are initialized and modified via a quantum circuit with specific quantum gates that change the probability of obtaining specific states. These more probable states convey the semantic correlations among specific semantic concepts (nodes of the semantic graph).

Whatever its implementation, the output of step II is therefore an entangled quantum state, or set of quantum states, QKG providing a quantum representation of knowledge graph KG.

The inventive method also comprises a third step III. Of transmitting entanglement relationships of the quantum representation of the knowledge graph to a receive station through a quantum channel. In preferred embodiments of the inventions this comprises a sub-step III.1 of converting entanglement relationship between said quantum subsystems into entanglement relationship between photons, which can then be transmitted in free-space propagation or through an optical fiber.

If the knowledge graph has been subdivided into a plurality of sub-graphs, step III will comprise a sub-step III.2 of separately transmitting the entanglement relationships of the quantum representations of said sub-graphs - either successively or simultaneously through respective sub-channels of said quantum channels. Sub-channel may correspond, for instance, to different quantum systems, different wavelength, spatial diversity, etc.

Alternatively, step III may comprise a sub-step III.3 of sequentially transmitting entanglement relationships between quantum subsystems of said entangled pairs over said quantum channel. This can be implemented using entangled photons carrying spin qubits. For example, entanglement can be generated via optical setups performing spontaneous parametric down-conversion or employing quantum dots. The latter outperforms the former in terms of photon-pair source efficiency and entanglement fidelity.

It is also possible to realise experimentally the entanglement of qudits. This has been realised on chip as shown in [Kues 2017]. This implies the possibility to exploit the benefits of photonic qudits and entanglement for the distributed quantum encoding and processing of semantic graph correlations. [Kues 2017] showed the realization of a quantum system with at least one hundred dimensions, formed by two entangled qudits with d = 10.

Whatever its implementation, the output of step III is therefore a set of "flying" (quantum subsystems (e.g. photons) FQS propagating through a transmission medium and conveying entanglement relationships.

As illustrated on figure 4, the transmit station (teacher) TS is mainly composed of three sub-systems:
- A classical computer CC, configured or programmed for carrying out step I of the above method, thus generating (and optionally simplifying) a knowledge graph comprising nodes representing concepts and edges connecting nodes and representing semantic relationships between the corresponding nodes. The term "computer" shall be construed broadly, encompassing suitably-programmed general purpose computers, microprocessors, microcontrollers, FPGA, ASICS, digital or even analog electronic circuits based on FPGA and or ASICS, etc.
- A quantum processor QP1, configured for carrying out step II of the above method, thus generating a quantum representation of the knowledge graph comprising a plurality of entangles quantum subsystems, wherein each quantum subsystem represents a node of the knowledge graph and an entanglement relationship between two said quantum subsystems represents an edge of the knowledge graph connecting the corresponding nodes. The quantum processor QP1 may be based on any existing or emerging quantum computer technology such as superconductors, photonics, ion or neutral atoms, etc.
- A quantum interface QI1 configured for carrying out step III of the above method, thus transmitting entanglement relationships of the quantum representation of the knowledge graph to a receive station through a quantum channel QCH. The quantum interface of the transmit station preferably converts the "stationary" qubits (or qudits, or continuous-state subsystems) of the quantum processor into "flying" qubits such as photons.

The operation and structure of a receive station ("learner") according to an embodiment of the invention will now be described with reference to figure 5 and figure 6, respectively.

The inventive method comprises a first step i of receiving from the quantum channel a plurality of entanglement relationships between quantum subsystems; and a step ii. of mapping said entanglement relationship into a knowledge graph KG' comprising nodes representing concepts and edges connecting nodes and representing semantic relationships between the corresponding nodes, wherein each node corresponds to a quantum subsystem and each entanglement relationship between two said quantum subsystems corresponds to an edge of the knowledge graph connecting the corresponding nodes.

As illustrated on figure 6, the receive station (learner) RS is mainly composed of two sub-systems:
- A quantum interface QI2 configured for carrying out step i. The quantum interface QI2 includes a plurality of quantum subsystems and comprises quantum hardware for receiving from the quantum channel QCH a plurality of entanglement relationships between its quantum subsystems, creating a local version QKG' of the quantum representation QKG of the knowledge graph KG generated at the transmit station.
- A quantum processor QP2 configured for carrying out step ii, thus mapping said entanglement relationship into a knowledge graph KG' comprising nodes representing concepts and edges connecting nodes and representing semantic relationships between the corresponding nodes, wherein each node corresponds to a quantum subsystem and each entanglement relationship between two said quantum subsystems corresponds to an edge of the knowledge graph connecting the corresponding nodes. Of course, it is expected that the knowledge graph KG' reconstructed at the receive station is substantially identical to the knowledge graph KG generated at the transmit station.

A whole quantum semantic communication system according to an embodiment of the invention comprises at least a transmit station TS and at least a receive station RS connected through quantum channel QCH, and optionally through an ancillary classical channel, as it is usually the case in the art of quantum communications.

### Bibliography

[Bengio 2013]: Y. Bengio et al., "Representation learning: A review and new perspectives", IEEE transactions on pattern analysis and machine intelligence, 35(8), 1798-1828.
[Calvanese Strinati 2021] E. Calvanese Strinati et al. "6G Networks: Beyond Shannon Towards Semantic and Goal-Oriented Communications" arXiv:2011.14844v3 17 February 2021
[Hein 2004]: M. Hein et al "Multiparty entanglement in graph states", Phys. Rev. A 69, 062311 (2004)
[Kues 2017]: M. Kues et al., "On-chip generation of high-dimensional entangled quantum states and their coherent control", Nature 546 (6760): 622-626, 2017.
[Landau 2016]: A. Landau et al. "Realisation of Qudits in Coupled Potential Wells", International Journal of Quantum Information 14(5), 1650029 (2016),
[Nikolaeva 2022]: A.S. Nikolaeva et al., "Efficient realization of quantum algorithms with qudits", arXiv:2111.04384, Jun. 2022
[Qin 2022] Z. Quin et al. "Semantic Communications: Principles and Challenges" arXiv:2201.01389v5 27 June 2022
[Sana 2022]: M. Sana and E. Calvanese Strinati, "Learning Semantics: An Opportunity for Effective 6G Communications," 2022 IEEE 19th Annual Consumer Communications & Networking Conference (CCNC), 2022, pp. 631-636
[Shannon 1948] C. E. Shannon, "A mathematical theory of communication." Bell Syst. Tech. J., vol. 27, no. 3, 1948
[Vaswani 2017]: A. Vaswani et al. "Attention is all you need," in Proc. 31st Int. Conf. Neural Inf. Process. Syst. (NIPS), Long Beach, CA, USA, Dec. 2017
[Whang 2023]: Y. Wang, Z. Hu, S. Kais, "Photonic Realization of Qudit Quantum Computing", In Photonic Quantum Technologies, M. Benyoucef (Ed.), 2023.
[Xie 2021]: Xie, H. et al. (2021). Deep learning enabled semantic communication systems. IEEE Transactions on Signal Processing, 69, 2663-2675.
[Zhou 2022]: F. Zhou, et al. "Cognitive Semantic Communication Systems Driven by Knowledge Graph", arXiv:2202.11958, Feb 2022, Arxiv.

## Claims

1. A method of transmitting semantic information, comprising the following steps carried out at a transmit station (TS):
I. using a computer (CC), generating a knowledge graph (KG) comprising nodes (N1 - N4) representing concepts and edges (E1 - E5) connecting nodes and representing semantic relationships between the corresponding nodes;
**characterized in that** it further comprises:
II. using a quantum processor (QP1), generating a quantum representation (QKG) of the knowledge graph (KG) comprising a plurality of entangled quantum subsystems, wherein each quantum subsystem represents a node of the knowledge graph and an entanglement relationship between two said quantum subsystems represents an edge of the knowledge graph connecting the corresponding nodes; and
III. using a quantum interface device (QI1), transmitting entanglement relationships of said quantum representation of the knowledge graph to a receive station through a quantum channel (QCH).

2. The method of claim 1 wherein step I comprises:
I.1. extracting semantic concepts and semantic relationships from input data (ID);
I.2 mapping said semantic concepts into semantic symbols, and semantic relationships between semantic concepts into relationships between the corresponding semantic symbols;
I.3 extracting the knowledge graph (KG) from said semantic symbols and their relationships.

3. The method of any one of the preceding claims wherein step I further comprises
I.4 subdividing the knowledge graph into a plurality of sub-graphs;
step II comprises generating quantum representations of said sub-graphs, and step III comprises separately transmitting the entanglement relationships of the quantum representations of said sub-graphs - either successively or simultaneously through respective sub-channels of said quantum channels.

4. The method of any one of claims 1 and 2 wherein step II comprises generating said quantum representation of the knowledge graph in the form of a plurality of entangled pairs of quantum subsystems, and step III comprises sequentially transmitting entanglement relationships between quantum subsystems of said entangled pairs over said quantum channel.

5. The method of claim 3 or claim 4 further comprising carrying out at least one operation between discretizing and thresholding semantic relationships between nodes of the knowledge graph before generating its quantum representation.

6. The method of any one of the preceding claims further comprising simplifying the knowledge graph before generating its quantum representation by replacing groups of K>2 nodes connected by K-1 equivalent edges with a single node.

7. The method of any one of the preceding claims wherein step III comprises converting entanglement relationship between said quantum subsystems into entanglement relationship between photons (FQS).

8. The method of any one of the preceding claims wherein said quantum subsystems are chosen between qubits and qudits.

9. A method for receiving semantic information, **characterized in that** it comprises the following steps carried out at a receiving station (RS):
i. using a quantum interface device (QI2), receiving from a quantum channel a plurality of entanglement relationships between quantum subsystems of the receive station (RS); and
ii. using a quantum processor (QP2), mapping said entanglement relationship into a knowledge graph (KG) comprising nodes (N1 - N4) representing concepts and edges connecting nodes (E1 - E5) and representing semantic relationships between the corresponding nodes, wherein each node corresponds to a quantum subsystem and each entanglement relationship between two said quantum subsystems corresponds to an edge of the knowledge graph connecting the corresponding nodes.

10. A method of performing semantic communication between a transmit station (TS) and a receive station (RS) connected by a communication channel, **characterized in that**
- the communication channel (QCH) comprises a quantum communication channel;
- the transmit station (TS) transmits semantic information over the quantum communication channel (QCH) by a method according to any one of claims 1 to 8; and
- the receive station (RS) receives semantic information through the quantum communication channel by the method of claim 9.

11. An apparatus (TS) for transmitting semantic information according to the method of any one of the claims 1 to 8 comprising:
- a computer (CC) configured for generating a knowledge graph (KG) comprising nodes (N1 - N4) representing concepts and edges (E1 - E5) connecting nodes and representing semantic relationships between the corresponding nodes;
**characterized in that** it further comprises:
- a quantum processor (QP1), configured for generating a quantum representation (QKG) of the knowledge graph comprising a plurality of entangles quantum subsystems, wherein each quantum subsystem represents a node of the knowledge graph and an entanglement relationship between two said quantum subsystems represents an edge of the knowledge graph connecting the corresponding nodes; and
- a quantum interface device (QI1), configured for transmitting entanglement relationships of said quantum representation of the knowledge graph to a receive station through a quantum channel (QCH).

12. An apparatus (RS) for receiving semantic information according to the method of claim 9 comprising:
- a quantum interface device (QI2), configured for receiving from a quantum channel (QCH) a plurality of entanglement relationships between quantum subsystems of the receive station; and
- a quantum processor (QP2), mapping said entanglement relationship into a knowledge graph (KG) comprising nodes (N1 - N4) representing concepts and edges (E1 - E5) connecting nodes and representing semantic relationships between the corresponding nodes, wherein each node corresponds to a quantum subsystem and each entanglement relationship between two said quantum subsystems corresponds to an edge of the knowledge graph connecting the corresponding nodes.

13. A semantic communication system comprising:
- an apparatus (TS) for transmitting semantic information according to claim 11;
- an apparatus (RS) for receiving semantic information according to claim 12; and
- a quantum communication channel (QCH) connecting the apparatus for transmitting semantic information and the apparatus for receiving semantic information.
